# EUROPÄISCHE PATENTANMELDUNG

(11) **EP 1 359 533 A2**
(43) Veröffentlichungstag der Anmeldung: **05.11.2003**
(21) Anmeldenummer: 03008619.3
(22) Anmeldetag: 15.04.2003
(51) Int. Cl.: G06K 7/00

(54) **Kartenterminal zum Lesen bzw. Beschreiben von Chipkarten**

(30) Priorität: 03.05.2002 DE 10219864
(71) Anmelder: Becker & Partner GmbH, 52078 Aachen (DE)
(72) Erfinder: Müllmann, Johannes, 52078 Aachen (DE); Becker, Martin, 52078 Aachen (DE)
(74) Vertreter: Kohlmann, Kai, Dipl.-Ing.

(57) **Zusammenfassung**

Um ein Kartenterminal (12) mit lediglich einem Kontaktträger (16) zu schaffen, der ohne den Einsatz eines Adapters sowohl kleinere als auch größere Chipkarten aufnehmen kann, insbesondere Standard-Chipkarten sowie Plug-In-Chipkarten, wird erfindungsgemäß ein Kartenterminal vorgeschlagen, das die größere und die kleinere Chipkarte in unterschiedlichen Ebenen (23,24) aufnimmt und der Kontaktträger beweglich in dem Gehäuse (13) gelagert ist.

## Beschreibung

Die Erfindung betrifft ein Kartenterminal zum wahlweisen Lesen und/oder Beschreiben einer größeren und einer kleineren, insbesondere übereinstimmende Kontaktfelder aufweisenden Chipkarte, mit einem in einem Gehäuse angeordneten, Kontaktelemente aufweisenden Kontaktträger, wobei die Kontaktfelder mit den Kontaktelementen in elektrisch leitende Verbindung bringbar sind.

Zum Auslesen, Bearbeiten und Einspeichern von Informationen auf Chipkarten, insbesondere mit Hilfe eines Personal-Computers, kommen Kartenterminals zum Einsatz. Chipkarten haben sich insbesondere als Telefonkarten, Krankenkassenberechtigungskarten sowie als Berechtigungskarten für Mobiltelefone durchgesetzt und sind derzeit in zwei gängigen Abmessungen verfügbar. Zum einen handelt es sich um eine Chipkarte im Standardformat nach ISO 7816, die eine Größe von etwa 86 mm x 54 mm aufweist. Zum anderen sind die deutlich kleineren, häufig in modernen Handys eingesetzten Chipkarten im Plug-In-Format von etwa 15 mm x 25 mm bekannt. Beide Kartentypen haben eine übereinstimmende Dicke von etwa 0,86 mm. Zwar sind die Kontaktfelder für die Chipkarten beider Formate übereinstimmend aufgebaut, jedoch ist deren Lage zu keinem Rand der jeweils anderen Chipkarte deckungsgleich.

Damit ein Kartenterminal Chipkarten beider Formate bearbeiten kann, kommen nach dem Stand der Technik entweder Kartenterminals mit zwei getrennten Aufnahmen für die unterschiedlich großen Chipkarten oder ein Adapter im Format der Standard-Chipkarte zum Einsatz, der die kleinere Plug-In-Karte aufnimmt.

Ein unter dem Handelsnamen "Chipy professional 2" bekanntes, zwei Aufnahmen aufweisendes Kartenterminal der Anmelderin eignet sich sowohl für Standard-Chipkarten als auch für Plug-In-Chipkarten. Der Vorteil dieser Lösung besteht darin, dass jeder Aufnahme ein an die Lage des Kontaktfeldes auf der Chipkarte angepasster Kontaktträger zugeordnet ist. Dies bringt jedoch den Nachteil mit sich, dass eine elektronische Wechselschaltung zum Umschalten zwischen den beiden Kontaktträgern für die unterschiedlichen Chipkarten vorgesehen sein muss.

Der Einsatz der ebenfalls aus dem Stand der Technik bekannten Adapter setzt ein Kartenterminal für eine Standard-Chipkarte nach ISO 7816 voraus. Der dem Format einer Standard-Chipkarte entsprechende Adapter hat eine taschenähnliche Aufnahme, in die die Plug-In-Chipkarte eingesetzt wird. Die Anordnung der taschenähnlichen Aufnahme berücksichtigt die abweichende Lage der Kontaktfelder der unterschiedlich großen Chipkarten und gewährleistet, dass die Kontaktfelder der Plug-In-Chipkarte mit den Kontaktelementen des Kontaktträgers in Berührung kommen. Problematisch ist allerdings, dass der Adapter dicker als eine Standard-Chipkarte ist und dadurch den empfindlichen Kontaktträger in dem Kartenterminal stärker belastet. Außerdem besteht die Gefahr, die Chipkarte beim Einsetzen in den Adapter durch elektrostatische Entladung zu beschädigen.

Um diesem Problem zu begegnen, wurden darüber hinaus bereits elektrische Adapterkarten entwickelt, die ebenfalls über die Abmessungen einer Standard-Chipkarte verfügen. An der Hinterkante weist diese Adapterkarte einen Kartenleser für die kleine Plug-In-Chipkarte auf. Die elektrischen Anschlüsse dieses Kartenlesers werden über Leiterbahnen der Adapterkarte zu einem Kontaktfeld geführt, dessen Position mit der des Kontaktfeldes einer Standard-Chipkarte übereinstimmt. Eine derartige Adapterkarte lässt sich zwar in der Dicke einer Standard-Chipkarte herstellen, so dass der Kontaktträger nicht unzulässig stark belastet wird, sie kann jedoch nur in Kartenterminals verwendet werden, in die die Chipkarte nicht vollständig eingeschoben werden muss.

Ausgehend von diesem Stand der Technik liegt der Erfindung die Aufgabe zugrunde, ein Kartenterminal mit lediglich einem Kontaktträger zu schaffen, das ohne den Einsatz eines Adapters sowohl kleinere als auch größere Chipkarten aufnehmen kann., insbesondere Standard-Chipkarten sowie Plug-In-Chipkarten.

Diese Aufgabe wird bei einem Kartenterminal der Eingangs erwähnten Art dadurch gelöst, dass das Kartenterminal die größere und die kleinere Chipkarte in unterschiedlichen Ebenen aufnimmt und der Kontaktträger beweglich in dem Gehäuse gelagert ist.

Die Aufnahme der größeren und der kleineren Chipkarte in unterschiedlichen Ebenen ermöglicht es, die abweichend angeordneten Kontaktfelder der größeren und der kleineren Chipkarte so auszurichten, dass die Kontaktelemente lediglich eines beweglich in dem Gehäuse gelagerten Kontaktträgers sowohl mit dem Kontaktfeld der größeren als auch der kleineren Chipkarte in elektrisch leitende Verbindung bringbar ist.

Die bei dem bekannten zwei Aufnahmen aufweisenden Terminal benötigte elektronische Wechselschaltung ist damit nicht notwendig.

Das erfindungsgemäße Kartenterminal lässt sich insbesondere zum wahlweisen Lesen und / oder Beschreiben von Standard-Chipkarten nach ISO 7816 sowie den kleineren Pug-In-Chipkarten verwenden. Die Standard-Chipkarten weisen jeweils zwei beabstandete Längsseitenkanten einer Länge von 85,6 mm und eine beabstandete Vorder- und Hinterkante von 54 mm auf. Die Länge der Längsseitenkanten der Plug-In-Chipkarte beträgt 25 mm während die Länge der Vorderkante 15 mm beträgt. An der Hinterkante weist die Plug-In-Chipkarte an einer Ecke eine Abschrägung mit einer Kantenlänge von 3 mm auf.

Ein vorzugsweise als ebene Platte ausgestalteter Kontaktträger, der in Richtung der Kontaktfelder der Chipkarten federbelastet ist, gewährleistet eine sichere elektrisch leitende Verbindung zwischen den Kontaktfeldern und den Kontaktelementen des Kontaktträgers, der an seinen Rändern vorzugsweise allseitig geführt ist.

Eine konstruktiv vorteilhafte Ausgestaltung des erfindungsgemäßen Kartenterminals mit den Merkmalen des Unteranspruchs 5 zeichnet sich dadurch aus, dass die Plug-In-Chipkarte und die Standard-Chipkarte in spitzwinklig zueinander verlaufenden Ebenen des Terminals aufgenommen werden. Die Ebene für die Standard-Chipkarte befindet sich bei einem auf einer Horizontale aufliegenden Kartenterminal unterhalb der Ebene für die Plug-In-Chipkarte. Das Gehäuse kann dann beispielsweise als zweiteiliges Spritzgießteil mit Vertiefungen und Schrägen hergestellt werden, die als Führungen für die Chipkarten dienen.

Bei einer derartigen Ausführungsform des Gehäuses kann die Führung des Kontaktträgers beispielsweise als rechteckige Vertiefung in dem unteren Teil des Gehäuses ausgeführt sein, an deren Seitenwänden die Ränder des Kontaktträgers entlanggleiten. Die in Einschubrichtung der Chipkarten gesehen vordere Wand dieser Vertiefung kann zugleich als Anlagefläche für die Vorderkante der Standard-Chipkarte dienen und damit die spitzwinklig zu der Ebene der Plug-In-Chipkarte verlaufende Ebene zusammen mit dem Schacht in dem Terminalgehäuse definieren. Es versteht sich von selbst, dass die Höhe des Schachtes größer als die Dicke der Standard-Chipkarte sein muss, um die zu der Schachtebene spitzwinklige Lage der Standard-Chipkarte zu ermöglichen.

Weitere konstruktiv vorteilhafte Ausgestaltungen des erfindungsgemäßen Kartenterminals ergeben sich aus den Merkmalen der Unteransprüche 8 - 10. Der wesentliche Unterschied dieser Ausführungsformen besteht darin, dass die unterschiedlichen Ebenen, in denen die größere und die kleinere Chipkarte aufgenommen werden, parallel zueinander verlaufen. Ein weiterer konstruktiver Unterschied besteht darin, dass das Gehäuse zwingend zweiteilig ausgeführt ist, wobei das obere Gehäuseteil die Chipkarten aufnimmt, während in dem unteren Gehäuseteil der Kontaktträger beweglich gelagert ist und an die Kontaktfelder, der jeweils in dem oberen Gehäuseteil gehaltenen Chipkarte bewegbar ist.

Nachfolgend wird die Erfindung anhand von zwei in den Figuren dargestellten Ausführungsbeispielen des näheren erläutert. Es zeigen:
- Fig. 1a: eine Standard-Chipkarte nach ISO 7816 ID-1,
- Fig. 1b: eine Plug-In-Chipkarte nach ISO 7816 ID-000,
- Fig. 1c: eine Aufsicht auf eine Standard- und eine Plug-In-Chipkarte sowie eine Seitenansicht einer Standard-Chipkarte,
- Fig. 2: eine erste Ausführungsform eines erfindungsgemäßen Kartenterminals wobei
Fig. 2a das Kartenterminal in Aufsicht, geschnittener Seitenansicht sowie einer Vergrößerung der geschnittenen Seitenansicht vor dem Einschieben der Plug-In-Chipkarte,
Fig. 2b während des Einschiebens der Plug-In-Chipkarte sowie
Fig. 2c mit in dem Terminal aufgenommener Plug-In-Chipkarte zeigt,
- Fig. 3: eine Darstellung des Ausführungsbeispieles nach Figur 2, wobei
Fig. 3a das Kartenterminal in Aufsicht, geschnittener Seitenansicht sowie einer Vergrößerung der geschnittenen Seitenansicht vor dem Einschieben der Standard-Chipkarte,
Fig. 3b während des Einschiebens der Standard-Chipkarte sowie
Fig. 3c mit in dem Terminal aufgenommener Standard-Chipkarte zeigt,
- Fig. 4: ein weiteres Ausführungsbeispiel eines erfindungsgemäßen Kartenterminals, wobei
Fig. 4a eine Aufsicht des Kartenterminals mit einer Plug-In-Chipkarte im geöffnetem Gehäusedeckel,
Fig. 4b das Verschließen des Gehäusedeckels sowie
Fig. 4c das Kartenterminal mit darin aufgenommener Plug-In-Chipkarte und geschlossenem Gehäusedeckel in Vergrößerung zeigt,
- Fig. 5: das Kartenterminal nach Figur 4a mit einer Standard-Chipkarte, wobei
Fig. 5a eine Aufsicht des Kartenterminals mit einer Standard-Chipkarte im geöffnetem Gehäusedeckel,
Fig. 5b das Verschließen des Gehäusedeckels sowie
Fig. 5c das Kartenterminal mit darin aufgenommener Standard-Chipkarte und geschlossenem Gehäusedeckel in Vergrößerung zeigt.

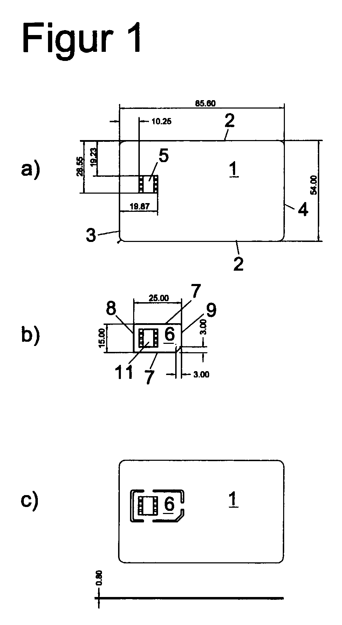

Figur 1a zeigt eine Standard-Chipkarte (1) nach ISO 7816, die jeweils zwei beabstandete Längsseitenkanten (2) mit einer Länge von 85,6 mm und zwei beabstandete Vorder- und Hinterkanten 3, 4 in einer Länge von 54 mm aufweist. Weiter gehen aus Figur 1a die Abstände eines Kontaktfeldes 5 der Standard-Chipkarte (1) zu der Vorderkante (3) und einer der Längsseitenkanten (2) hervor.

Figur 1b zeigt eine kleinere Plug-In-Chipkarte (6), die ebenfalls durch jeweils zwei beabstandete Längsseitenkanten (7) sowie zwei beabstandete Vorder- und Hinterkanten (8, 9) begrenzt wird.

Aus Figur 1c wird deutlich, dass der Abstand des Kontaktfeldes (11) zur Vorderkante (8) und den Längsseitenkanten (7) nicht mit den Abständen des Kontaktfeldes (5) zu den Kanten der Standard-Chipkarte (1) übereinstimmt. Weiter geht aus der Figur 1 hervor, dass die Kontaktfelder (5, 6) der Standard-Chipkarte (1) sowie der Plug-In-Chipkarte (6) übereinstimmend aufgebaut sind.

Mittels der Kontaktfelder (5, 11) wird eine elektrisch leitende Verbindung zwischen der Chipkarte (1, 6) einerseits und dem Kontaktträger in einem Kartenterminal andererseits hergestellt.

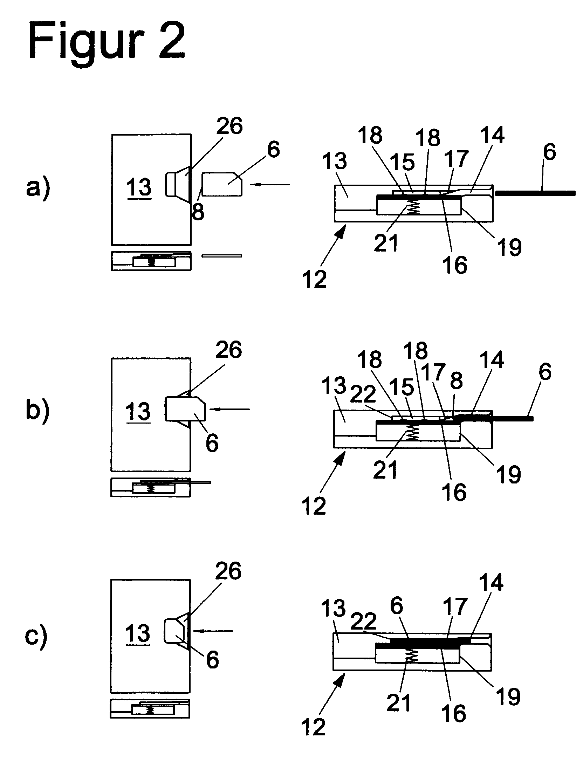

Fig. 2 zeigt ein erstes Ausführungsbeispiel eines erfindungsgemäßen Kartenterminals (12), das im wesentlichen aus einem Gehäuse (13), einem seitlich darin angeordneten Schacht (14) zum Einschieben der Chipkarten (1, 6), einer die Plug-In-Chipkarte (6) führenden Aufnahme 15 sowie einem beweglich in dem Gehäuse (13) in Richtung der Aufnahme (15) angeordneten Kontaktträger (16). Des weiteren befinden sich zu beiden Seiten der Aufnahme (15) die lediglich auf die Oberfläche der Standard-Chip-Karte wirkenden Schrägen, die mit der Plug-In-Chipkarte (6) nicht in Berührung kommen. Der Kontaktträger (16) weist an seiner Oberfläche eine Reihe von Kontaktelementen (18) auf, die entsprechend den Kontakten der Kontaktfelder (5, 11) der Standard- bzw. Plug-In-Chipkarte (1, 6) angeordnet sind.

Der Kontaktträger (16) ist in einer beckenartigen, rechteckigen Ausnehmung (19) in dem Gehäuse (13) beweglich geführt. Für den erforderlichen Andruck der Kontaktelemente (18) an das Kontaktfeld (5) bzw. (11) der Chipkarten sorgt eine im Bereich der Kontaktelemente (18) auf der Unterseite des ebenen Kontaktträgers (16) angeordnete Feder (21), deren Federstärke so zu bestimmen ist, dass die zulässigen Kräfte auf die Chipkarte, insbesondere deren Kontaktfeld nicht überschritten werden. Die höchstzulässigen Kräfte, die auf das Kontaktfeld (5, 11) und damit den Chip wirken dürfen, bewegen sich zwischen 0,2 und 0,5 N, während die Kräfte, die auf die gesamte Chipkarte (1, 6) wirken dürfen, nach der Norm zwischen 1 und 10 N betragen dürfen. Unter Außerachtlassung sämtlicher konstruktiv bedingter Reib- und Gewichtskräfte würden auf eine Standard-Chipkarte bei einem maximal möglichen Federweg von 5 mm und einer Federstärke von 1,8 N / mm Federweg eine Kraft von lediglich 9 N ausgeübt. Wie Figur 2c verdeutlicht, liegt die Plug-In-Chipkarte (6) ausschließlich auf der Kontaktiereinheit (16) auf und erhält von der Unterseite keinen weiteren Andruck durch die Feder (21).

Um die Plug-In-Chipkarte (6) problemlos über den Schacht (14) in die Aufnahme (15) einschieben und aus der Aufnahmen wieder herausziehen zu können, ist in dem Oberteil des Gehäuses (13) eine Aussparung (26) vorgesehen.

Das Einschieben der Plug-In-Chipkarte (6) in das Kartenterminal (12) verdeutlicht die Bildfolge 2a - 2c, insbesondere die vergrößerten Querschnitte in der unteren Bildhälfte. Die Plug-In-Chipkarte (6) wird mit ihrer Vorderkante (8) voraus und nach unten weisendem Kontaktfeld (11) über den Schacht (14) in die Aufnahme (15) geschoben, die in dessen direkter Verlängerung angeordnet ist. Die Aufnahme (15) besteht im wesentlichen aus einem rechteckigen Einschnitt in dem oberen Teil des Gehäuses (13), dessen Seitenwände an den Längsseitenkanten (7) der Plug-In-Chipkarte (6) zur Anlage kommen. Der Vorschubweg der Plug-In-Chipkarte (6) wird durch Anlage der Vorderkante 8 an der vorderen Wand (22) der Aufnahme (15) begrenzt.

Weiter verdeutlicht Figur 2b in Verbindung mit Figur 2c, dass die Schrägen (17) die kleinere Plug-In-Chipkarte (6) während des Einschiebens nicht erfassen, so dass der Kontaktträger (16) seine Ausgangslage nicht verlässt. Infolge dessen wird auf das Kontaktfeld (11) der Plug-In-Chipkarte (6) durch den Kontaktträger (16) keine zusätzliche Kraft ausgeübt.

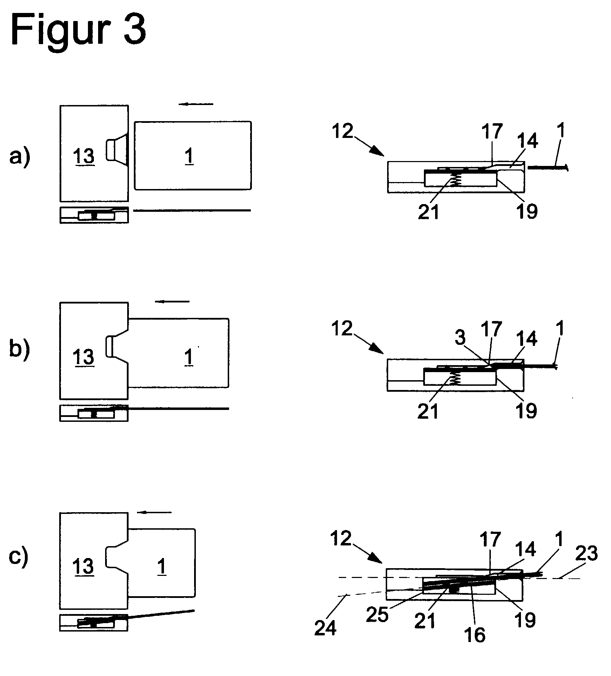

Anders verhält es sich beim Einschieben einer Standard-Chipkarte (1) in den mindestens deren Breite entsprechenden Schacht (14). Figuren 3b, 3c verdeutlichen, wie die Oberfläche der Standard-Chipkarte (1) von den Schrägen (17) erfasst und die Karte aus der Ebene (23) für die Plug-In-Chipkarte (6) in die spitzwinklig dazu verlaufende Ebene (24) für die Standard-Chipkarte (1) verlagert wird, bis deren Vorderkante (3) an der vorderen Wand (25) der Ausnehmung (19) zur Anlage kommt. Die versetzte Anordnung der vorderen Wand (25) zu der vorderen Wand (22) der Aufnahme (15) gleicht dem unterschiedlichen Abstand der Kontaktfelder (11) bzw. (5) zu den Vorderkanten (3) bzw. (8) der Plug-In- bzw. Standard-Chipkarte aus.

Bei dem Einschieben der Standard-Chipkarte wird der gesamte Kontaktträger (16) gegen die Kraft der Feder (21) nach unten gedrückt und in der Ausnehmung (19) schräg gestellt. Der Kontaktträger (16) ist in der Ausnehmung (19) mit Spiel geführt, um die gewünschte Schrägstellung (vgl. Fig. 3c) zu ermöglichen.

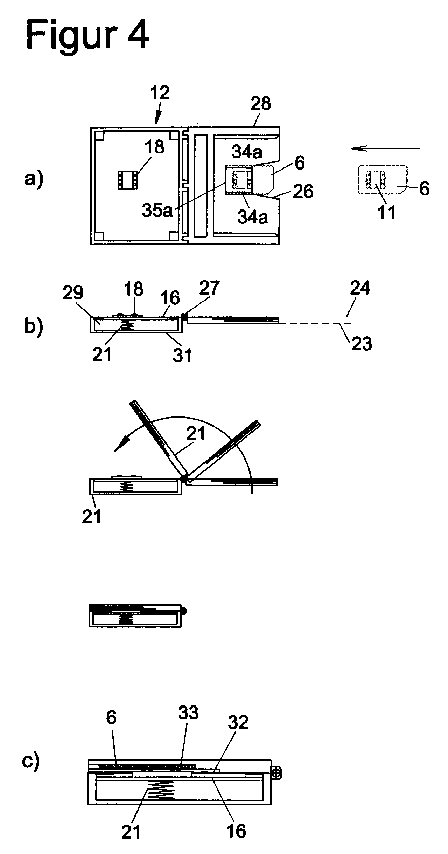

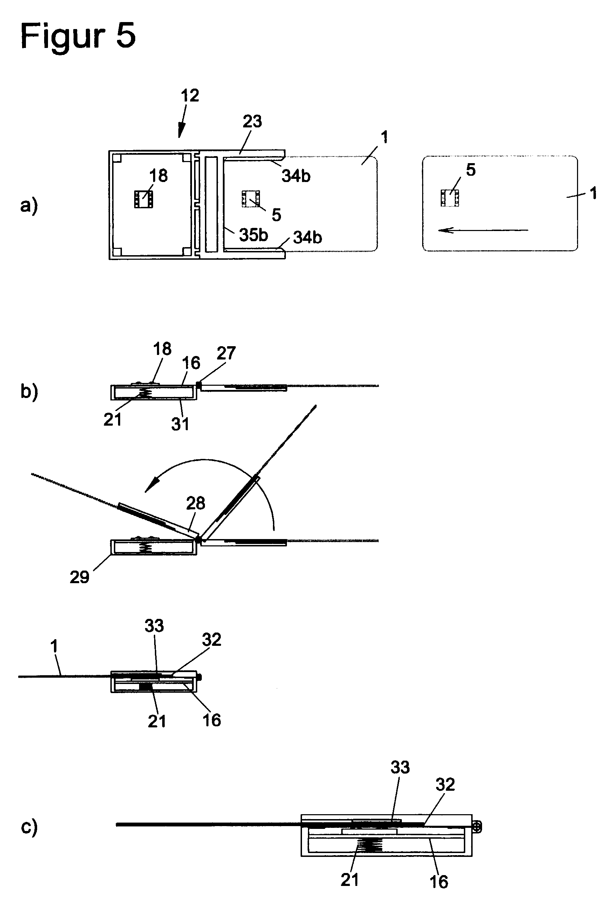

Ein weiteres Ausführungsbeispiel des erfindungsgemäßen Kartenterminals (12) zeigen die Figuren 4 und 5, in denen mit dem ersten Ausführungsbeispiel übereinstimmende Elemente mit denselben Bezugszeichen gekennzeichnet wurden. Der wesentliche Unterschied dieses Ausführungsbeispiels besteht darin, dass das Gehäuse aus zwei über ein Gelenk (27) miteinander verbundenen Teilen besteht, wobei das obere Teil (28) ein kastenförmiges unteres Teil (29) nach Art eines Deckels verschließt. In dem unteren Teil (29) ist der Kontaktträger (16) beweglich gelagert und stützt sich über die Feder (21) gegen den Boden (31) des unteren Teils (29) ab. Die Funktions- und Wirkungsweise des unteren Teils (29) entspricht der der Führung (19) des Ausführungsbeispiels nach den Figuren 2 und 3.

Das deckelförmige obere Teil (28) weist eine erste Aufnahme (32) für die Standard-Chipkarte sowie eine parallel dazu angeordnete zweite Aufnahme (33) für die Plug-In-Chipkarte (6) auf, die Führungen (34, 35) für die Längsseitenkanten (2,7) sowie die Vorderkanten (3,8) der Chipkarten (1,6) besitzen.

Zum Einschieben einer Plug-In-Chipkarte (6) wird das obere Teil (28) ausgeklappt und die Plug-In-Chipkarte (6) in die Führungen (34a, 35a) eingesetzt. Sodann wird das deckelförmige obere Teil (28) wie in den Figuren 4b, 5b dargestellt, auf das untere Teil (29) verschwenkt. Wie insbesondere in Figur 4c erkennbar, wird die Lage des Kontaktträgers (16) nicht verändert, so dass auch bei diesem Ausführungsbeispiel keine zusätzlichen Kräfte aufgrund der Feder (21) auf das Kontaktfeld (11) der Plug-In-Chipkarte (6) ausgeübt werden.

Wird indes die Standard-Chipkarte (1) in die beim zugeklappten oberen Teil (28) tiefer liegenden Führungen (34b, 35b) eingesetzt (vgl. Figur 5), wird der Kontaktträger (16) aus seiner in Figur 5b dargestellten Ausgangslage gegen die Kraft der Feder (21) in die in Figur 5c dargestellte Position bewegt. Die hierbei auftretenden Kräfte auf das Kontaktfeld (5) der Standard-Chipkarte (1) überschreiten nicht die zulässigen Werte.

Als Abwandlung des Ausführungsbeispieles eines Kartenterminals (12) nach den Figuren 4 und 5 ist eine Variante denkbar, bei der die vollständige Chipkarte (1) bzw. (6) von dem deckelartigen oberen Teil in einer ersten bzw. zweiten Vertiefung aufgenommen wird. Zum vereinfachten entnehmen, insbesondere der Standard-Chipkarte kann am Rand der Vertiefung eine Ausmuldung angeordnet sein.

Als Vorteile der erfindungsgemäßen Kartenterminals ist deren preiswerte Produktion, insbesondere als Spritzgießteile hervorzuheben. Insbesondere sind keine zusätzlichen Hilfsmittel, wie insbesondere Adapter für Plug-In-Chipkarten erforderlich. Schließlich ist ein Berühren der empfindlichen Kontaktfelder (11) bzw. (5) weitestgehend ausgeschlossen.

### Bezugszeichenliste

| **Nr.** | **Bezugszeichen** | **Nr.** | **Bezugszeichen** |
|---|---|---|---|
| 1. | Standard-Chipkarte | 19 | Ausnehmung |
| 2. | Längsseitenkanten | 20 | - |
| 3. | Vorderkante | 21 | Feder |
| 4. | Hinterkante | 22 | Wand |
| 5. | Kontaktfeld | 23 | Ebene |
| 6 | Plug-In-Chipkarte | 24 | Ebene |
| 7 | Längsseitenkanten | 25 | Wand |
| 8 | Vorderkante | 26 | Aussparung |
| 9 | Hinterkante | 27 | Gelenk |
| 10 | - | 28 | oberes Teil |
| 11 | Kontaktfeld | 29 | unteres Teil |
| 12 | Kartenterminal | 30 | - |
| 13 | Gehäuse | 31 | Boden |
| 14 | Schacht | 32 | erste Aufnahme |
| 15 | Aufnahme | 33 | zweite Aufnahme |
| 16 | Kontaktträger | 34 | Führungen |
| 17 | Schrägen | 35 | Führungen |
| 18 | Kontaktelemente | | |

## Patentansprüche

1. Kartenterminal zum wahlweisen Lesen und/oder Beschreiben einer größeren und einer kleineren, jeweils Kontaktfelder aufweisenden Chipkarte, mit einem in einem Gehäuse angeordneten, Kontaktelemente aufweisenden Kontaktträger, wobei die Kontaktfelder mit den Kontaktelementen in elektrisch leitende Verbindung bringbar sind, **dadurch gekennzeichnet, dass** das Kartenterminal (12) die größere und die kleinere Chipkarte (1, 6) in unterschiedlichen Ebenen (23, 24) aufnimmt und der Kontaktträger (16) beweglich in dem Gehäuse (13) gelagert ist.

2. Kartenterminal nach Anspruch 1, **dadurch gekennzeichnet, dass** die größere Chipkarte eine Standard-Chipkarte (1) nach ISO 7816 ID-1 und die kleinere Chipkarte eine Plug-In-Chipkarte (6) nach ISO 7816 ID-000 ist, die jeweils zwei beabstandete Längsseitenkanten (2/7) und zwei beabstandete Vorder- und Hinterkanten (3, 4, 8, 9) aufweisen.

3. Kartenterminal nach Anspruch 1 oder 2, **dadurch gekennzeichnet, dass** der als ebene Platte ausgestaltete Kontaktträger (16) in Richtung der Kontaktfelder (5, 11) der Chipkarte (1, 6) federbelastet ist.

4. Kartenterminal nach einem der Ansprüche 1 bis 3, **dadurch gekennzeichnet, dass** der Kontaktträger (16) an seinen Rändern allseitig geführt ist.

5. Kartenterminal nach einem der Ansprüche 1 bis 4, **dadurch gekennzeichnet, dass** in dem Gehäuse (13) ein zumindest der Breite der Vorder- /Hinterkante (3, 4) der größeren Chipkarte (1) entsprechender Schacht (14) angeordnet ist, der in eine Führung (15) für die kleinere Chipkarte (6) übergeht, die stirnseitig durch einen Anschlag (22) für deren Vorderkante (8) begrenzt wird, seitlich neben der Führung (15) für die kleinere Chipkarte (6) auf die Oberfläche der größeren Chipkarte (1) wirkende Führungsmittel (17) angeordnet sind, die die größere Chipkarte (1) aus der Ebene für die kleinere Chipkarte in die spitzwinklig dazu verlaufende Ebene für die größere Chipkarte verlagern, deren Vorderkante (3) an einer Fläche zur Anlage kommt.

6. Kartenterminal nach Anspruch 5, **dadurch gekennzeichnet, dass** die Anlagefläche für die Vorderkante (3) der größeren Chipkarte (1) Bestandteil der Führung (19) des Kontaktträgers (16) ist.

7. Kartenterminal nach Anspruch 5 oder 6, **dadurch gekennzeichnet, dass** in dem Gehäuse (13) eine in den Schacht (14) mündende Eingriffsöffnung (26) angeordnet ist.

8. Kartenterminal nach einem der Ansprüche 1 bis 4, **dadurch gekennzeichnet, dass**
- das Gehäuse aus einem oberen und einem unteren Teil besteht, die beweglich zueinander angeordnet sind,
- in dem unteren Gehäuseteil der Kontaktträger beweglich gelagert ist,
- in dem oberen Gehäuseteil eine erste Vertiefung zur Aufnahme der größeren Chipkarte angeordnet ist, wobei die Grundfläche der ersten Vertiefung zumindest der Fläche der größeren Chipkarte entspricht und
- in der Grundfläche der ersten Vertiefung eine zweite Vertiefung zur Aufnahme der kleineren Chipkarte angeordnet ist, wobei die Grundfläche der zweiten Vertiefung zumindest der Fläche der kleineren Chipkarte entspricht.

9. Kartenterminal nach einem der Ansprüche 1 bis 4, **dadurch gekennzeichnet, dass**
- das Gehäuse (13) aus einem oberen und einem unteren Teil (28, 29) besteht, die beweglich zueinander angeordnet sind,
- in dem unteren Gehäuseteil (29) der Kontaktträger (16) beweglich gelagert ist,
- in dem oberen Gehäuseteil (28)eine erste Aufnahme (32) für die größere Chipkarte (1) angeordnet ist, die Führungen für die Längsseitenkanten (2) sowie die Vorderkante (3) der größeren Chipkarte (1) aufweist und
- in dem oberen Gehäuseteil eine zweite Aufnahme (33) für die kleinere Chipkarte (6) angeordnet ist, die Führungen für die Längsseitenkanten (7) sowie die Vorderkante (8) der kleineren Chipkarte (6) aufweist.

10. Kartenterminal nach Anspruch 8 oder 9, **dadurch gekennzeichnet, dass** der obere und untere Gehäuseteil (28, 29) über ein Gelenk (27) oder einen Schiebemechanismus beweglich miteinander verbunden sind.
